# EUROPEAN PATENT SPECIFICATION

(11) **EP 0 673 010 B1**
(45) Date of publication and mention of the grant of the patent: **04.06.2003**
(21) Application number: 95102968.5
(22) Date of filing: 02.03.1995
(51) Int. Cl.: G08G 1/0969, G09B 29/10

(54) **Guide system**
Führungssystem
Système de guidage

(30) Priority: 18.03.1994 JP 4923794; 02.05.1994 JP 9346694; 02.05.1994 JP 9346794
(43) Date of publication of application: 20.09.1995
(73) Proprietor: AISIN AW CO., LTD., Anjo-shi Aichi 444-1192 (JP); EQUOS RESEARCH CO. LTD., Chiyoda-ku, Tokyo (JP)
(72) Inventor: Kamiya, Kazuo, Anjo-shi, Aichi 446 (JP); Morimoto, Hirofumi, Nishio-shi, Aichi 445 (JP); Yokoyama, Shoji, Anjo-shi, Aichi 446 (JP)
(74) Representative: VOSSIUS & PARTNER

(56) References cited:
- EP-A- 0 511 447
- PATENT ABSTRACTS OF JAPAN vol. 016 no. 143 (P-1335) ,9 April 1992 & JP-A-04 001520 (SUMITOMO ELECTRIC IND LTD) 7 January 1992,
- PATENT ABSTRACTS OF JAPAN vol. 015 no. 037 (P-1159) ,29 January 1991 & JP-A-02 275308 (MITSUBISHI MOTORS CORP) 9 November 1990,

## Description

The present invention relates to a guide system for tracing the current position of a vehicle in order to achieve sight-seeing guide of tourist objects located in the vicinity of a road on which the vehicle is traveling.

A variety of navigation systems for selecting an optimum route and guiding a vehicle along the selected route up to a destination when a start point (current location) and the destination are specified have been proposed. Most conventional navigation systems do nothing but guide a vehicle up to a destination by instructing a turning direction (right or left turn) and a traveling direction by using intersections and distinctive objects as a target, but systems capable of performing sight-seeing guide as well have been also proposed.

For example, JP-A-61-290473, JP-B-63-19005, JP-A-4-1520 or the like have disclosed apparatuses which comprises a memory means for storing sight-seeing information, detects a current location of a vehicle, and display maps, the current location of the vehicle and a traveling direction, and audibly outputs sight-seeing information or the like. Additionally, a guiding means that uses displayed image instead of audio output has been also disclosed. Further, JP-A-4-1898 has disclosed an audio guide system capable of selecting a phrase of sight-seeing guide information sentence to be audibly output from a memory within a time to reach a destination, the time being calculated according to vehicle speed, the sight-seeing guide sentences being divided to phrases and stored in the memory with respective phrases assigned with priority order.

However, the aforementioned conventional guide system is not capable of showing objects other than objects located on roads because it is designed so as to search and show an object located on a current position or on a road on which the vehicle is scheduled to travel, according to a detected position. Further, the conventional guide system is not capable of showing an object which is located in the vicinity of a road on which the vehicle is traveling or scheduled to travel and the conventional system starts the guide when the vehicle comes to a point in which an object exists. Therefore, if guide objects are dispersed in a wide area and particularly if there is no guide object over a long distance, the conventional system provides no information for a while. Although the conventional system can show objects which have address information, it is not capable of providing information about, for example, a road on which the vehicle is currently traveling or area around the road.

Accordingly, an object of the present invention is to solve the aforementioned problems and to provide a guide system capable of performing appropriate sight-seeing guide for various guide objects in a wide area without presenting an interval of pause.

This object is achieved with the features of the claims.

Because the guide system according to the present invention comprises a guide data storing means in which guide data of objects located on a road, streets and objects existing in local area are classified into types and stored, a guide information output means for outputting the guide of an object, a current position detecting means for detecting and tracing the current position, and a guide output means for searching and extracting an object from the guide data storing means and outputting the guide thereof, the guide output means having a plurality of search means for searching guide objects according to said types on the basis of the current position obtained from the current position detecting means and then the guide system searches objects according to the types by using a plurality of search means, it is possible to search guide objects in different ranges. Further, because, according to the present invention, a plurality of search means are assigned with priority order and, according to the priority order, sequentially perform searching to extract guide objects and further the guide data are classified into point objects, line objects and zone objects so that the point objects, line objects and zone objects are assigned with the priority in this order and the guide objects are searched according to the respective types, it is possible to search and extract the guide objects sequentially from an object having the highest priority and output the guide thereof. Still further, in the case wherein point objects are dispersed in a wide area and particularly when there is no point object throughout a long distance, it is possible to eliminate the interval of pause in which no guide object is shown.
FIG. 1 shows an embodiment of the guide system according to the present invention.
FIGs. 2a, 2b and 2c illustrate the conditions for starting guiding of an object.
FIG. 3 illustrates guide points for a single object.
FIG. 4 illustrates the setting condition for a shown object.
FIG. 5 shows an example of guide objects.
FIG. 6 shows an example of the system configuration showing the detail of the guide output means.
FIG. 7 shows an example of the key arrangement composing the control means.
FIG. 8 is a flowchart of object search and guide processing.
FIG. 9 is a flowchart of the search processing for a guide object using the manual guide.
FIG. 10 is a flowchart of object search processing.
FIG. 11 illustrates the setting processing of a current position.
FIG. 12 illustrates the operation for changing the scale of a map picture.
FIG. 13 illustrates the operation for determining the north and south on a map picture.
FIG. 14 illustrates the correction processing for the current position.
FIG. 15 shows an example of the file configuration of a guide CD.
FIG. 16 illustrates a vehicle incorporating the guide system of the present invention.
FIG. 17 is a flowchart of the setting processing for a guided flag.
FIG. 18 is a flowchart of the search processing for a guide object.

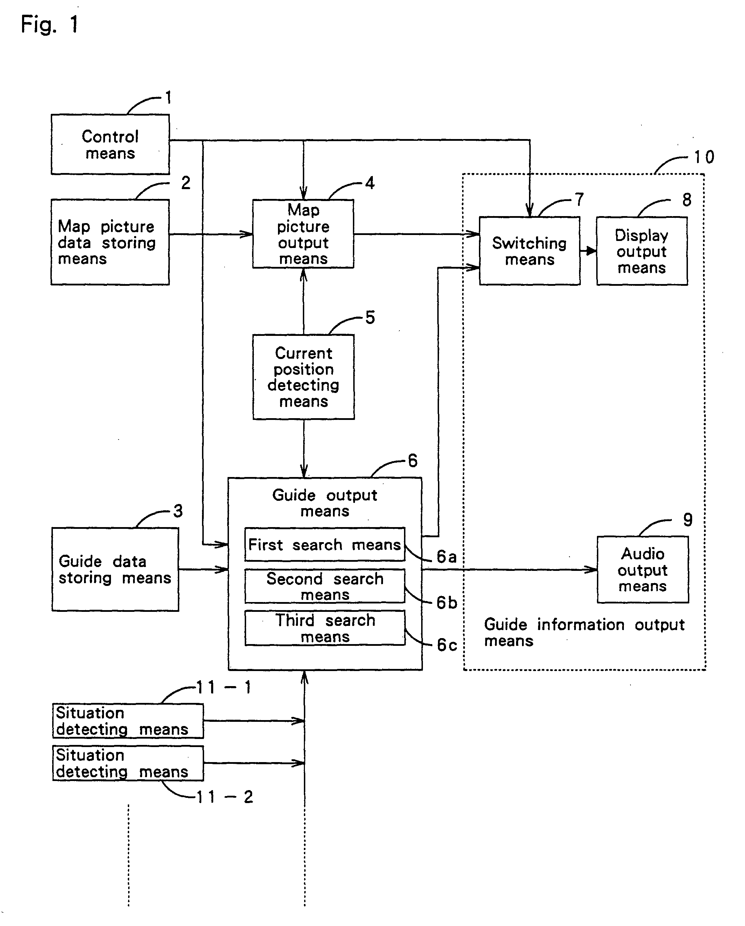

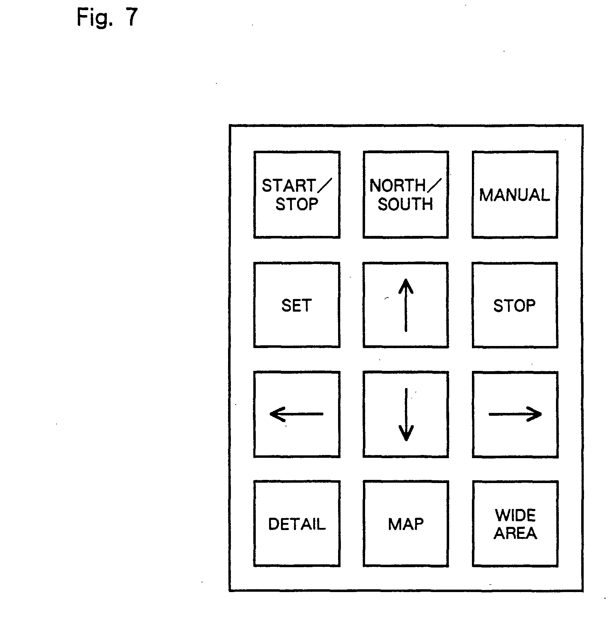

Referring to FIG. 1, a control means 1 has keys for magnifying a map picture displayed on a display output means 8 to a detailed map, reducing a map picture to a wide area map, switching the direction of the map by, for example, changing the display direction from the north at the top of the displayed map to the south at the top and switching the display content from a guide image to a map picture. For this purpose, for example, a remote control unit having manual keys as shown in FIG. 7 is used. The display output means 8 is used for visually outputting the images of guide objects and map pictures. An audio output means 9 is used for audibly outputting the information of a guide object. A map picture data storing means 2 stores the map picture data about roads divided into meshes and guide objects. A guide data storing means 3 stores visual and audio guide data about objects located on roads, streets and objects in areas according to the classified types of the objects. The types of the objects are classified to point objects such as a certain coordinate and a small area spreading several tens meters, line objects having a length such as roads, and wide zone objects such as a city, town, village, plain, basin, specific area, national park or the like.

Further, it is permissible to divide the guide data of each object to a plurality of short guide units (phrases) and then store them in the guide units by setting priority order to the respective guide units. A current position detecting means 5 detects the north or south latitude, east or west longitude, a current position on a road on which a vehicle is currently travelling, advancement direction, vehicle speed or the like and trace these objectives by means of a GPS (global positioning system) receiver unit, a vehicle speed sensor, a steering angle sensor, a gyro sensor, a terrestrial magnetism sensor or the like. A map picture output means 4 reads map picture data of an area around a current position from the map picture data storing means 2 and outputs the map picture and the indication signal of advancement direction. A guide output means 6 extracts the guide data of a guide object from the guide data storing means 3 according to information such as a current position, advancement direction, vehicle speed, road or the like and converts the guide data to video signals and audio signals for output. If a next guide object is extracted during guiding of an object, that is, output of guide data of the object, the guiding of the object being shown is canceled at the end of the currently-output guide unit and guiding of the next object is started. Further, if the next guide object is extracted, the guide data of an object being currently shown is compared with the guide data of the next guide object in terms of priority order. If the next guide object has a higher priority, guiding of the next guide object is started and the object which has been already guided or shown can be registered as an already-shown object in order to prevent the same object from being shown again.

The guide output means 6 has a first search means 6a, second search means 6b and third search means 6c. It is possible to set different search ranges for these search means 6a, 6b, 6c by, for example, making the first search means 6a search the aforementioned point objects, the second search means 6b search the aforementioned line objects, and then the third search means search the aforementioned zone objects. Further, it is possible to operate these search means according to pre-assigned priority order or switch the priority order thereof by operating the manual key of the control means 1.

A switching means 7 switches the display output from the display output means 8 between a map picture from the map picture output means 4 and a guide image from the guide output means 6, and indicates a current position and advancement direction on a displayed map picture. If a guide object is extracted during the traveling of a vehicle, and then visual and audio guide is started, the map picture display signal is switched to a guide video signal from the guide output means 6. Additionally, if the map display key of the control means 1 is operated under this condition, the guide image is switched to a corresponding map picture.

Situation detecting means 11-1, 11-2, ..... detect situation around a vehicle, comprising a colander for detecting seasons, a clock for detecting time range, a thermo-hygrometer for detecting temperature and humidity, a rainfall sensor for detecting weather conditions, such as rain or snow, a traffic congestion receiver for receiving traffic congestion information and the like.

The guide output means 6 may search a guide object stored in the guide data storing means 3 according to the information such as a current position, advancement direction, vehicle speed, road condition or the like which are entered from the current position detecting means 5, by means of the search means of the guide output means 6, arrange output data by editing a guide sentence according to situations detected by the situation detecting means 11-1, 11-2, ...., and convert the output data into guide video signals and audio signals in order to output the visual and audio signals.

A guide information output means 10 according to the present invention comprises the switching means 7, the display output means 8 and the audio output means 9.

The guide system having the aforementioned construction according to the present invention is supplied with power to display a title picture on the screen of the display output means when the ACC is ON, and is powered off when the ACC is OFF. If a CD-ROM storing a program is already set when the power is tuned on, the program is started. However, if a CD-ROM is set after the power is turned on, the program is started by operation of the control means 1. When the guide program is started, the current position is detected and traced continually as the vehicle travels, so that a map picture covering the current position approximately at the center thereof is displayed with the north at the top and an arrow is displayed therein to indicate the advancement direction. After a guide object is extracted from the guide data storing means 3 by searching according to the current position, traveling direction and vehicle speed, the guide data of the extracted object is output.

As described above, the guide objects are classified into: point objects such as facility, building and monument; line objects such as bridge, street, lake and large scale facility having large length or width; and zone objects such as national park, plain, and other regional feature. The timing of starting to output the guide date of point objects is rather restricted, whereas the timing of starting to output the guide data of line and zone objects can be selected within time ranges of some extent. Relatively, point objects come first in output priority, followed by line objects, and zone objects come last. The guide data of line objects and zone objects are allowed relatively large latitudes for output timing and, therefore, can wait until the guide data of a more important point object is output. In search of a guide object, the point objects are first searched. If no appropriate point object is found, then the line objects are searched. If no appropriate line object is found, the zone objects are searched. It is permissible to set a condition such that if an event in which no point object is found continues for a predetermined length of time, then the line objects and zone objects are searched sequentially. Further, it is permissible to set the system so that if no point object found, the line objects and zone objects are searched sequentially, and so that if a point object having higher priority is found during guiding of a line or zone object, the current guiding of the line or zone object is canceled to start the guiding of the point object. Further, it is permissible to make the system capable of selecting a guide object by searching the line objects and the zone objects when manual guide is instructed by means of the control means 1.

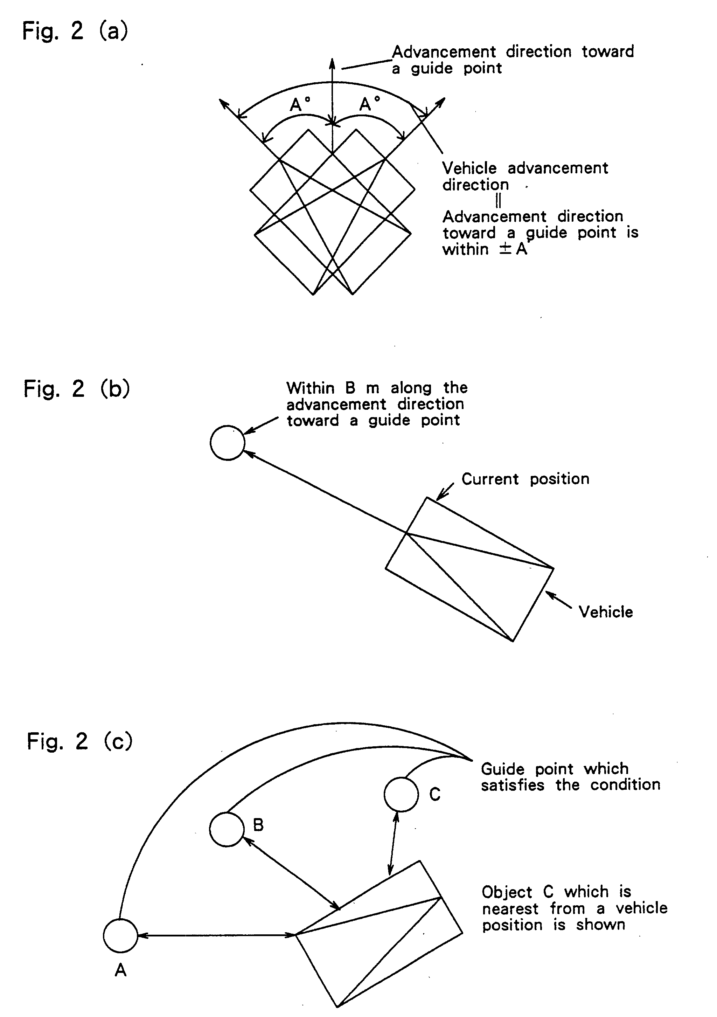

Guiding is performed as follows. First, a guide object is extracted from the guide data storing means 3 according to the current position, advancement direction, vehicle speed or the like. When a vehicle approaches the guide object, the guide output means 6 automatically extracts corresponding guide data and converts the guide data to guide picture and voice, thus starting guiding of the object. Guiding is not started until the guide output means 6 determines that all the following conditions are satisfied at a guiding start point, which is set for each guide object. The conditions to start guiding are that: the travelling direction of a vehicle is within ±A° relative to the advancement direction in the guiding start point, as shown in FIG. 2a; a vehicle position is within B meters from the guide point coordinate with the vehicle speed being considered; the guide object has not been shown; and another object is not being shown. Additionally, it is possible to perform guiding, that is, output the guide data, of any one of guide objects in the vicinity of the current position (vehicle) (within ± A'° relative to advancement direction in the guiding start point, the distance between the guide point and the current position being at most B'm, wherein A'°≥ A°, B'≥ B) by giving a manual guide instruction by using the control means 1.

Further, the first search means 6a of the guide output means 6 extracts a point object from the guide data storing means 3 according to the current location, advancement direction, vehicle speed or the like. When a vehicle approaches the guide object, the guide output means 6 automatically outputs the guide data of the object in the form of image and voice under the condition that guide object has not been shown, and that no other guide object is being shown or that if an object being shown has been canceled because the object is of a lower priority. This search area is a range in which the traveling direction of the vehicle is within ± A° with respect to the vehicle advancement direction at the guide start point as shown in FIG. 2a and the vehicle position is located within B m from the guide start point when the vehicle speed is considered, as shown in FIG. 2b. If the first search means 6a does not extract any object, the second search means 6b and the third search means 6c extract any guide object such as line objects and zone objects from the guide data storing means 3 according to the current location, and if the guide object has not been shown and no other object is being shown, the guide output means 6 automatically outputs a corresponding guide image and voice. Regarding the search range for the line object, for example, a road on which the vehicle is traveling is determined according to the current location and the guide objects are searched for with reference to the road. Regarding the search range of the zone object, zone objects that cover the coordinates of the current location are searched for. Thus, for the respective zone objects, the coverage is set and registered with a plurality of coordinate values by operating the manual key. The first search means 6a searches a wider area point for objects and extracts guide objects located in the search range, as shown in FIG. 2(c), (range in which the vehicle traveling direction is within A'° with respect to the advancement direction at the guide start point and the vehicle position is within B' m from the guide start point when the vehicle speed is considered, wherein A'°>A°, B'>B) near the current location (vehicle) in which guide objects are to be searched. The extracted objects may be shown in order from the object which is the nearest to the current location or it is permissible to start guiding of objects which are nearer than any other objects sequentially. For this purpose, it is permissible to add an auxiliary search means 6a'. Additionally, it is permissible to set priority on respective guide objects so as to show an object having the highest priority.

The guide termination condition is basically that guide data being output is output up to the end. However, when the guide cancel switch of the control means 1 is operated or when a vehicle comes to another object guide point, the next guide unit of the currently-shown guide object is compared with the leading guide unit of the other object in terms of the priority. If the leading guide unit of the currently-reached object has a higher priority than the next guide unit of the currently-shown object, the guiding of the current object is canceled at the end of the currently-output guide unit. To summarize, a guide data comprises, for example, a plurality of guide units each having a single picture and voice lasting for several seconds. The guide system of the present invention determines at each guide unit whether guiding should be performed or canceled. Further, it is permissible to assign priority order to the guide units so that, when a plurality of guide objects satisfy the guide start condition, selection of the execution of a guide, adjustment of the guide length and cancellation thereof are determined according to the priority order.

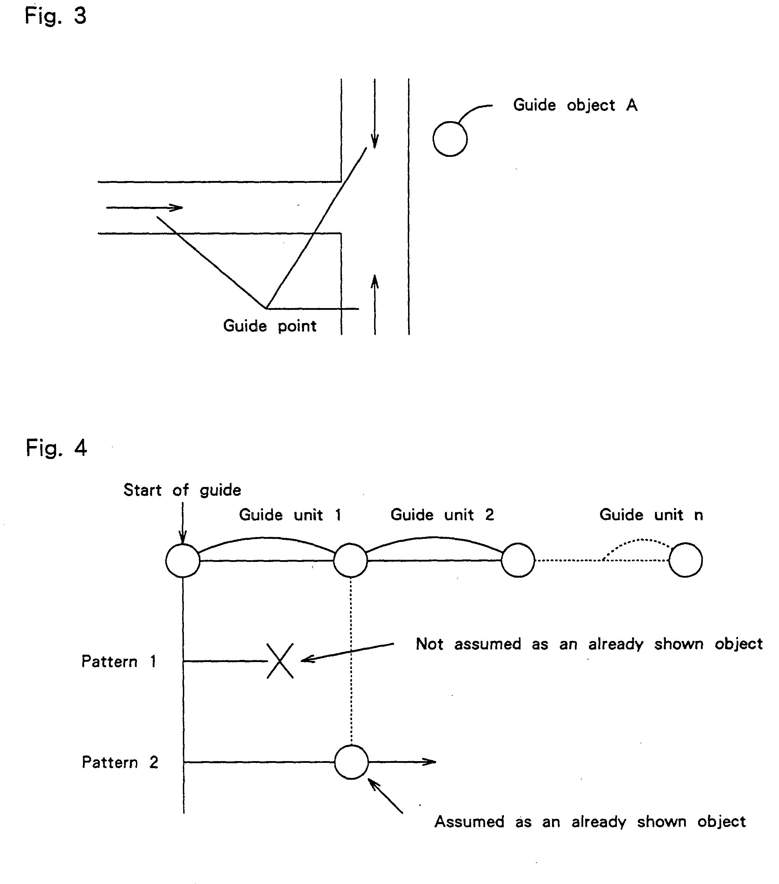

As for the guide point for the point object, a plurality of guide points are provided for a single guide object. For example, three guide points are provided in the vicinity of T-shaped road, as shown in FIG. 3, so that the vehicle position with respect to the longitude and the latitude and the advancement direction of the vehicle are specified.

An object which has already been shown is memorized as a shown object so as to prevent the object from being shown again. The system may memorize an object as a shown object if at least one guide unit of the object has been output, or memorize an object as a shown object if a specified guide unit thereof having the highest priority has been output. Instead of objects, guide units may be memorized as already-output guide units if the guide units have been output.

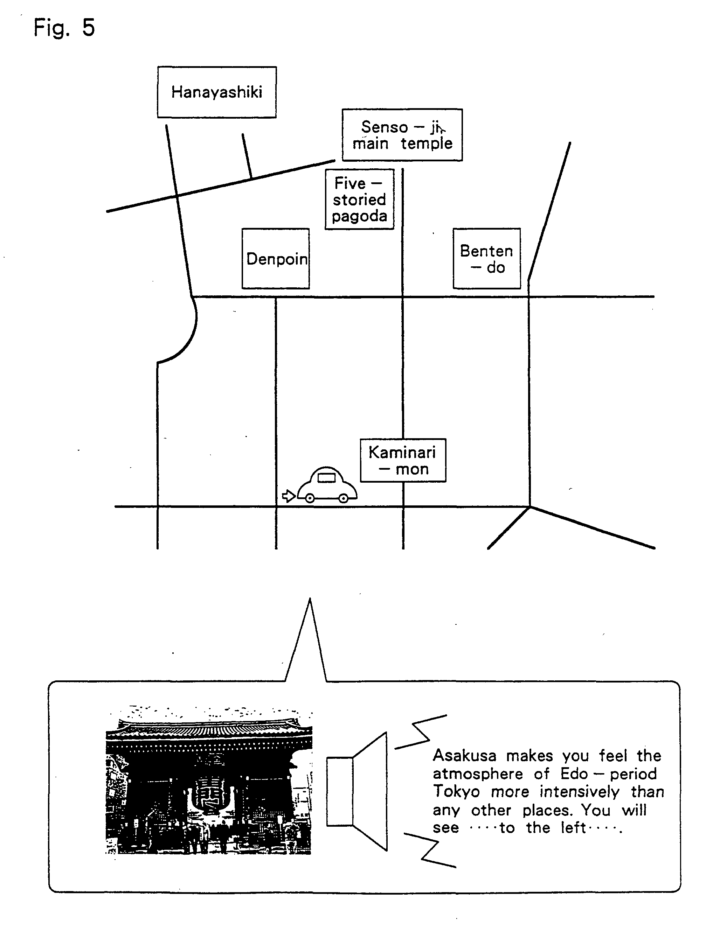

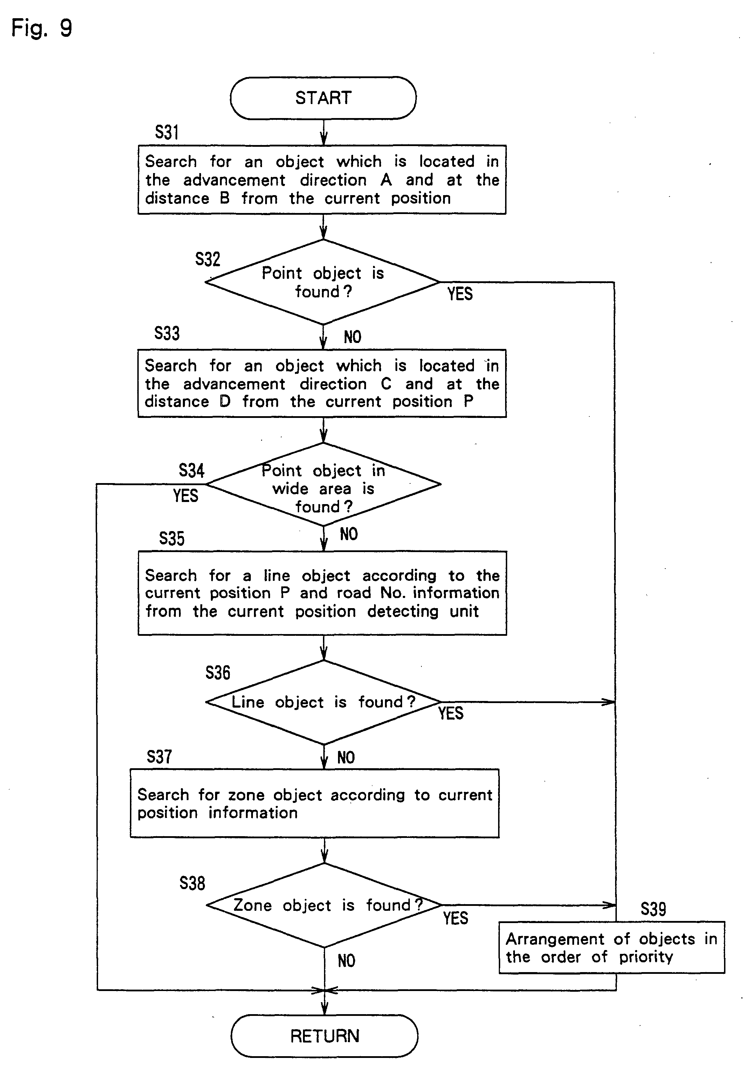

Next, an example of a guide process will be explained briefly. FIG. 5 shows the case in which a vehicle is travelling near the gate Kaminari-mon in Asakusa, Tokyo. The guide image and voice data for Kaminari-mon, which is currently a guide object, is stored in the guide data storing means 3, as shown in the FIG. 5. The guide output means 6 extracts guide objects which satisfy the aforementioned guide start condition from the guide data storing means 3 according to a vehicle current position, an advancement direction and vehicle speed obtained from the current position detecting means 5. If "Kaminari-mon" is extracted as a guide object, the guide output means 6 reads the guide data about the guide image and voice of Kaminari-mon to convert the data to corresponding signals and output them. When the guide video signal is output, the switching means 7 switches the map picture display signal output from the map picture output means 4 to the guide video signal, causing the display output means 8 to output the guide image as shown in the FIG. 9 and the audio output means 9 to output the guide voice "Asakusa makes you feel ...". When such guiding operation is terminated, the guide output means 6 memorizes "Kaminari-mon" as an already shown object. Therefore, even if the vehicle passes Kaminari-mon from a different direction again, it is possible to prevent that guide data from being output again.

However, assuming that the guide system does nothing but search for an object on the basis of a current position for guide in FIGURE 5, if the vehicle passes straight from the left to the right, only the guide image and voice of Kaminari-mon are output. Other guide objects which are not seen from the road on which the vehicle travels, such as the main temple of Senso-ji, a five-storied pagoda, Denpoin, Benten-do, Hanayashiki or the like, are not contained in the guide information about Kaminari-mon. Then, if user wants guide information about prominent objects (having high priority) around the current position, operating the manual key of the control means 1 causes the guide data output means to extract objects in the vicinity of the current position and output them. As a processing for the case in which a plurality of guide objects are extracted, it is permissible to list the extracted objects and select desired objects from them so as to be output, or output guide objects which are nearer the current position sequentially or show an object near the current position and then show an object which is near the shown object or provide respective objects with priority and output the objects according to the priority order. Although a guide sentence saying "You see ...a on the right of roadS is output when an object located on a road is automatically extracted from the current position and output, when objects which are not seen directly from a road are shown by means of the manual key, guide sentences are divided to guide units and modified so that they have appropriate expression such as "There is .... away from the road to the right", "There is .... to the right near here" or the like.

There may be the case in which the current position of a vehicle, location of an object or situation of the object are not known when the object guide is started. In such a case, if the map key of the control means 1 is operated, the switching means 7 switches the guide video signal output from the guide output means 6 to the map picture display signal output from the map picture output means 4, so that the map picture shown in FIG. 5 is displayed. During this switching operation, corresponding guide voice is output. In this manner, it is possible to switch to the map picture even after guiding of the object is started in order to obtain information about the position of the guide object and the surrounding conditions thereof.

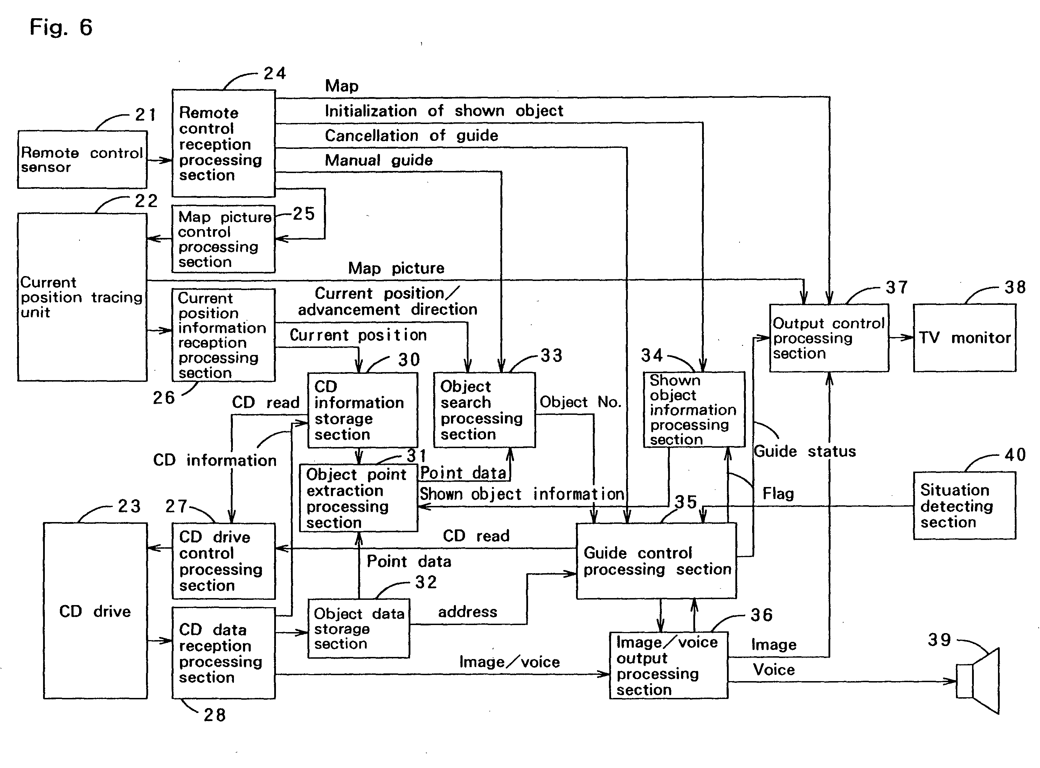

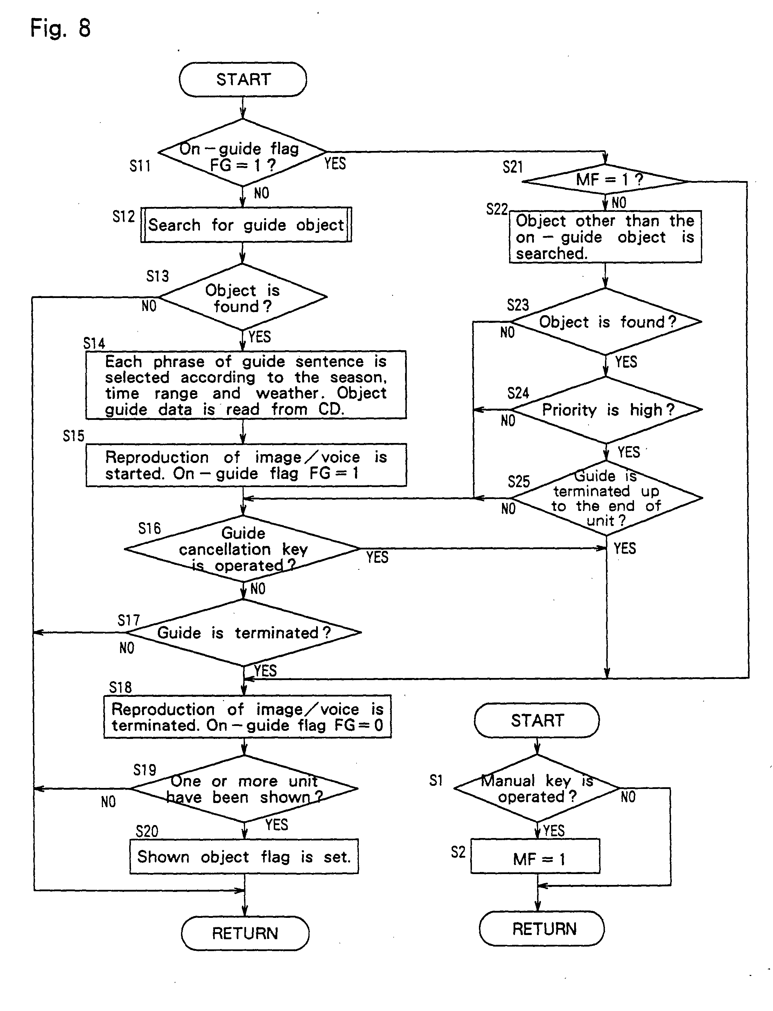

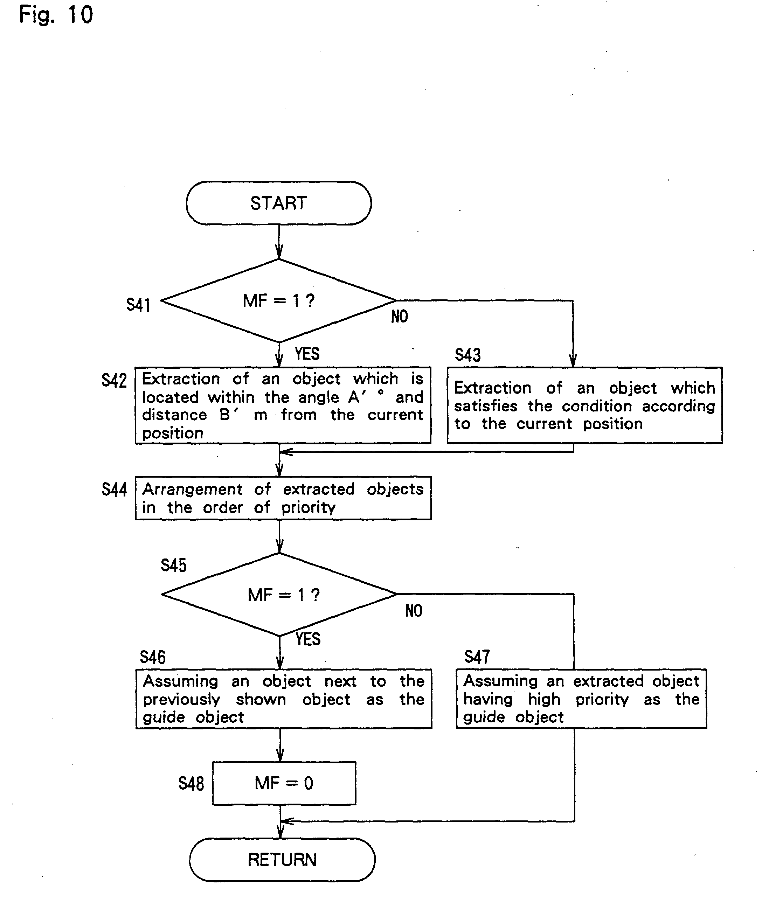

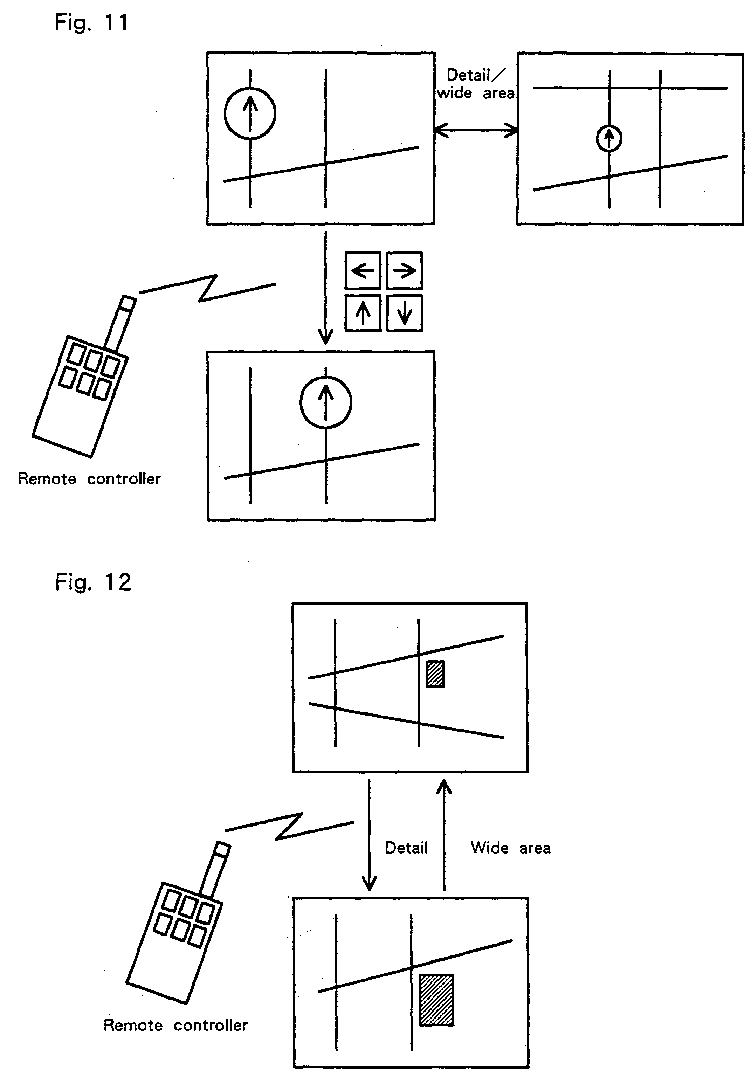

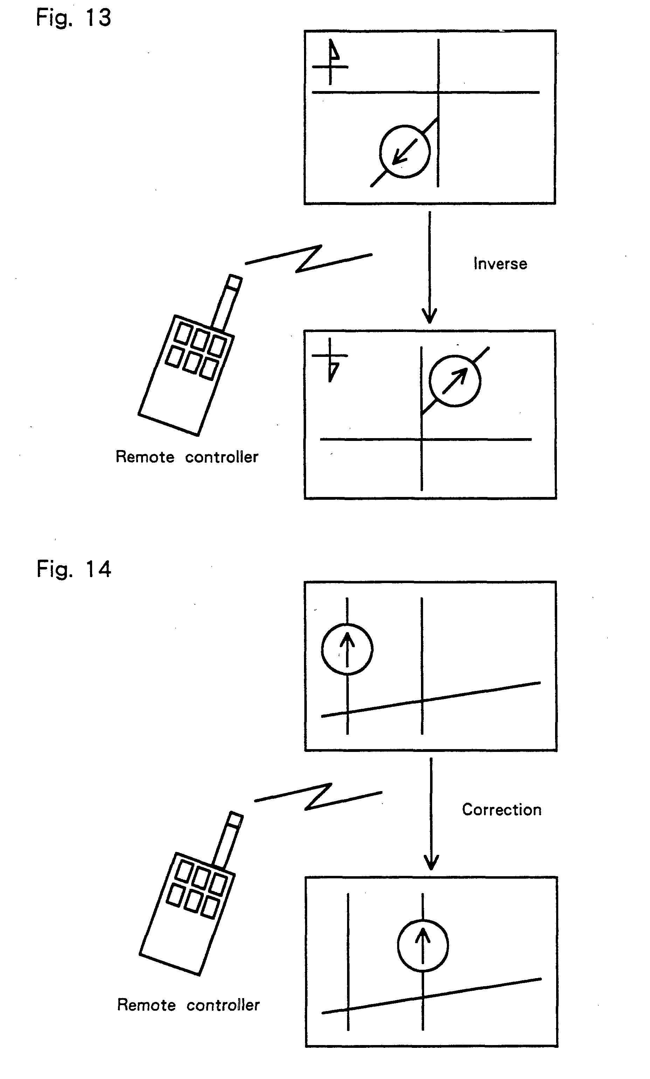

An example of the construction of the guide output means will be described. FIG. 6 is a diagram showing an example of the construction of the guide output means in details. FIG. 7 shows an example of the key which is a control means. FIG. 8 is a flowchart of object search and guide processing. FIG. 9 is a flowchart of the search processing for a guide object when the manual guide is used. FIG. 10 is a flowchart of object search processing. FIG. 11 illustrates the current position setting processing. FIG. 12 illustrates the operation for changing the scale of the map picture. FIG. 13 illustrates the operation for determining the north/south of the map picture. FIG. 14 illustrates the processing for correcting the current position.

Referring to FIG. 6, a remote control sensor 21 receives various control signals such as start-up signal and stop signal transmitted from a wireless remote controller using, for example, optical signal, and converts the optical signal into electric signal. The control signals from the remote controller include an a shown object initialization command, a guide cancellation command, a manual guide command, a current position map picture control command or the like. A remote control reception processing section 24 converts signal received by the remote control sensor 21 to key code by decoding and then, transmits the shown object initialization command to a guided information processing section 34, the guide cancellation command to a guide control processing section 35, the manual guide command to an object search processing section 33 and the current position map picture control command to a map picture control processing section 25. The map picture control processing section 25 converts a map picture control command which is received by the remote control sensor 21 and processed by the remote control reception processing section 24 according to a communication format and transmits converted command to a current position tracing unit 22. The map picture control processing means 25 changes the scale of a map picture (reduction/expansion) and the direction of the map (north/south) displayed on a TV monitor 38, according to a map picture control command.

The current position tracing unit 22 detects and traces the current position of a vehicle. The current position tracing unit 22 has, for example, GPS, vehicle speed sensor, map data or the like to detect and trace a current position in terms of the longitude and latitude, a road on which a vehicle is traveling, traveling direction and vehicle speed to provide data of a map of a predetermined direction and scale covering the current position substantially at the center. Thus, it is permissible to use a conventional navigation system as the current position tracing unit 22. A current position information reception processing section 26 extracts current position information received from the current position tracing unit 22, transmits current position and a traveling road to a CD information storage section 30, and transmits the current position, advancement direction and traveling speed to an object search processing section 33.

The CD drive 23 reads a plurality of guide CDs storing guide information. The CD drive control processing section 27 processes control information for controlling reading of the guide CDs by the CD drive 23 according to CD/read commands from the CD information storage section 30 or a guide control processing section 35, and gives instructions to the CD drive 23. A CD data reception processing section 28 receives CD data read out according to read control information, transmits CD information to the CD information storage section 30, and transmits object data to an object data storage section 32, and transmits compressed guide image and voice data to an image/voice output processing section 36.

The CD information storage section 30 issues read command to read CD information of each guide CD, stores CD information, such as the disk label of each guide CD, guide object file, guide point file or the like, issues a read command to read data of objects in the vicinity of a current position according to the stored CD information and the current position, and transmits the coordinate range for extracting object point data to an object point extraction processing section 31.

The object data storage section 32 stores the object data selected from the CD data processed by the CD data reception processing section 28, transmits the object point data to the object point extraction processing section 31 and transmits object address to the guide control processing section 35. The object point extraction processing section 31 masks already-output information or data of the object point stored in the object data storage section 32 and extracts data of object point in the vicinity of the current position. An object search processing section 33 searches object point data for the number of an object to be shown, according to the current position, advancement direction or manual guide command.

The guide control processing section 35 controls guiding operation according to a guide cancellation command from the remote control reception processing section 24, object No. from the object search processing section 33 and information about time, season, weather or the like from a situation detecting section 40. The guide control processing section 35 selects the object address of an object No. found by the object search processing section 33 from the object addresses stored in the object data storage section 32, and transmits a CD read command to the CD drive control processing section 27, and transmits a guide command (guide start/cancellation) to an image/voice output processing section 36 and transmits a guide status from the image/voice output processing section 36 to an output control processing section 37. Further, the guide control processing section 35 sets a shown object flag for a shown object information processing section 34. The shown object information processing section 34 holds the shown object flag set by the guide control processing section 35 until it is initialized by a shown object initialization command from the remote control reception processing section 24, and transmits the shown object information to the object point extraction processing section 31.

The image/voice output processing section 36 decodes guide code data received through the CD data reception processing section 28. The image/voice output processing section 36 decodes the code data to guide image which is output to a TV monitor 38 and guide voice which is output to a speaker 39, and transmits the respective decoded signals to the output control processing section 37 for the TV monitor 38 and to the speaker 39. The output control processing section 37 for the TV monitor 38 switches a map picture sent from the current position tracing unit 22 to a guide image sent from the image/voice output processing section 36 according to a guide status input from the guide control processing section 35 and a map switching signal from the remote control reception processing section 24.

In FIG. 6, the remote control sensor 21, the remote control reception processing section 24 and the map picture control processing section 25 constitute the control means 1 as shown in FIG. 1. The current position tracing unit 22 comprises the map picture data storing means 2, the current position detecting means 5 and the map picture output means 4 as shown in FIG. 1. The CD drive 23, the output control processing section 37, the TV monitor 38 and the speaker 39 correspond to the guide data storing means 3, the switching means 7, the display output means 8 and the audio output means 9, respectively. The situation detecting section 40 corresponds to the situation detecting means 11-1, 11-2, ... and the other processing sections (26 - 36) constitute the guide output means 6.

Then, the operation of the overall system will be described. First, when the system is started, the CD information storage section 30 issues a read command to read CD information from respective guide CDs and stores the read information so as to be ready for the start of guide. The CD information storage section 30, when receiving current position information from the current position tracing unit 22, issues a command for reading object data contained in a specified area including that current position by referring to the CD information and stores the read object data in the object data storage section 32. The object point extraction processing section 31 extracts object point data excluding shown object information from the object point data stored in the object data storage section 32. The object search processing section 33 searches the object point data extracted by the object point extraction processing section 31 for the number of an object to be shown, according to the current position and advancement direction.

The guide control processing section 35 issues a read command to the CD drive control processing section 27 by referring to the address of the object data stored in the object data storage section 32, according to the object No. and a detection signal from the situation detecting section 40. The situation detecting section 40 comprises a colander, a clock, a thermo-hygrometer, a rainfall sensor, a traffic congestion receiver or the like. In this embodiment, the situation detecting section 40 determines a situation by considering all these detection signals. More specifically, the situation detecting section 40 comprises a matrix corresponding to detection signal ON/OFF and determines a situation according to this matrix. Optionally, the situation detecting section 40 may transmit a signal individually corresponding to the output signal of each sensor without doing such synthetic judgement. The situation detecting section 40 issues a read command for selecting a guide sentence corresponding to the content of such a detection signal. Data about guide image (compressed) and voice (compressed) is input to the image/voice output processing section 36 from a guide CD by this read command. The image/voice output processing section 36, on receiving a guide command from the guide control processing section 35, decodes data about guide image (compressed) and voice (compressed) to guide video signal for the TV monitor 38 and guide voice signal for the speaker 39, and transmits these signals. At the same time, the image/voice output processing section 36 transmits a guide status to the guide control processing section 35. When this guide status is transmitted to the output control processing section 37 through the guide control processing section 35, the output control processing section 37 changes video signal for the TV monitor from a map picture output from the current position tracing unit 22 to a guide image from the image/voice output processing section 36. When each guide unit is completed, the image/voice output processing section 36 notifies the guide control processing section 35 of the event. The guide control processing section 35 sets a guide flag of shown object information in the shown object information processing section 34.

The wireless remote controller has keys as shown in FIG. 7. In FIG. 7, a START/STOP key is used for starting a program stored in a CD-ROM from the condition in which a title picture is displayed and for stopping a program when a map picture is displayed. A NORTH/SOUTH key is used for inverting the north/south direction of a map when a map picture is displayed. When a vehicle is advancing toward the northwards from the west-east direction, a map picture in which the north is up is displayed. If a vehicle is advancing toward the northwards with respect to the west-east direction, the advancement direction is shown at the bottom of the display screen. This north/south key is used to switch the display screen to a map picture in which the south is at the top or change the screen inversely. A manual key is used for starting the guide of a manual guide object displayed in a map picture or a guide image or for starting the guide of a next candidate guide object which appears in the course of the manual guide. A detail key and a wide-area key are used for changing the scale of a map picture and displaying the scale. A set key is used for initialization and correction of the current position in a map picture. A STOP key is used for canceling the operation such as canceling of a guide on automatic guide screen or manual guide screen to return to a map picture, cancellation of initialization, cancellation of correction of the current position or the like. Arrow keys are used for moving the current position cursor in order to correct the current position on a map picture. A map key is used for changing a displayed guide image to a map picture.

The operation of the manual key is always monitored as shown in FIG. 8 (step S1). When the manual key is operated, the manual mode flag MF is set to "1" (step 2). In object search/guide processing, it is checked whether on-guide flag FG is "1" (step S11). The on-going flag FG is set to "1" while guiding is being performed. Unless this on-guide flag FG is "1", a guide object is searched for (step S12). If a guide object is found, the guide data of that object is read from the CD and then reproduction of image and voice is started, so that the on-guide flag FG is set to"1" (steps S13 - S15). After this, it is checked whether the guide stop key is operated, and unless that key is operated, it is checked whether the guide has been finished (steps S16, S17).

If the on-guide flag FG is "1", whether the manual mode flag MF is "1" is checked (step S21). If the manual mode flag MF is set to "1", reproduction of image and voice is canceled and then the on-guide flag FG is reset to "0" (step S18). However, if the manual mode flag MF is "0", an object other than the on-guide object are searched for (step S22). If such an object is found, whether the priority of the object is higher than the priority of the on-guide object is checked (step S23, S24). If the priority of the object is higher, guiding is performed up to the end of a guide unit of the on-guide object (step S25) and then the step S18 and the following steps are executed.

If it is determined that the guide cancellation key is operated in the step S16, or if the guide is finished in the step S17, or if the manual mode flag MF is set to "1" in step S21, or if it is determined that the on-guide object is finished up to the end of the guide unit in step S25, reproduction of image and voice is terminated and the on-guide flag FG is reset to "0" (step S18). At this time, if one or more guide units have been shown, the shown object flag of the object is set (steps S19, S20).

In the search processing in the step S12, a point object is searched for as shown in FIG. 9 (step S31). If no point object is found (step S32), search is performed to find a point object which exists in a wide area, that is, within the advancement direction C° from the current position and within the distance of D m from the current position (C°>A°, D>B) (step S33). It is determined whether any point object exists in the wide area (step S34). If a point object is found in the wide area, the return is performed. The reason for this procedure is that the point object will soon be found in the normal area as the vehicle travels. However, if there is no point object found in the wide area, it means that no guide output of a point object will be provided for a while. Thus, a line object is searched for according to road No. information specified from, for example, the current position P (step S35). If there is no line object (step S36), a zone object is searched for according to current position information (step S37). If any zone objects are extracted, they are lined according to their priorities (step S39). Then, the processing from the step S13 on, as illustrated in FIG. 8, is performed.

In point object search processing in the step S31, whether the manual mode flag MF is "1" is checked, as shown in FIG. 10 (step S41). If the manual mode flag MF is "0", objects which satisfy the condition are extracted from the current position (step S43). If the manual mode flag MF is "1", objects which satisfy the condition where objects are in a wide area, that is, within the advancement direction A'° from the current position and within the distance of B' m from the current position are extracted (step S42). Then the extracted objects are arranged according to their priorities (step S44). If the manual mode flag MF is "1", an object having priority next to the priority of a previously shown object is assumed as a guide object and then the manual mode flag MF is reset to "0". If the manual mode flag MF is "0", an object having the highest priority is assumed as a guide object. Then, the processing from the step S32 in FIG. 9 is performed.

In the aforementioned processing for extraction of a guide object and output of the guide object according to the priority order, it is permissible to provide sets of object data stored in the guide CD with priorities beforehand and extract an object No. from point data found by the object search processing section 33 and output the guide object according to according to their priorities. Further, it is permissible to obtain a distance between the current position and an object found according to the current position and then output guide objects sequentially according to the obtained distance, that is, starting with an object which is nearest to the current position. More specifically, if that a plurality of guide objects 1, 2, 3, 4 are found and extracted with reference to the current position of a vehicle, the distances to the respective guide objects d1, d2, d3, d4 are obtained. If the relation of d4<d1<d3<d2 is obtained as a result of comparing these distances, first the guide object 4 is output, followed by the output of the guide objects 1, 3, and 2. The distance from the current position to an object can be calculated on the basis of the current position and the coordinates of the guide object, for example, the coordinates of longitude, latitude or the like. Further, it is permissible to select and output a guide object having the shortest distance to the current position among guide objects found with reference to the current position, obtain the distances from the output guide object and the other guide objects, then output the guide object nearest to the output guide object. This procedure is repeated. More specifically, if the guide objects 1, 2, 3, 4 are found and extracted with reference to the current position as in the aforementioned example, the distances d1, d2, d3, d4 from the current position to the respective objects are obtained. Then, if the relation of d4>d1>d3>d2 is obtained as a result of comparing these distances, the guide object 4 is first output. Then, the distances d41, d42, d43 from the guide object 4 to the respective objects 1, 2, 3 are obtained. Here, if the relation of d41<d43<d42 is obtained as a result of comparing these distances, the guide object 1 is output. In the same manner, the distances d12, d13 from the guide object 1 to the respective objects 2, 3 are obtained. If the relation of d12<d13 is obtained as a result, the guide object 2 is output and finally the guide object 3 is output.

If the current position is not stored because of initialization condition or because the memory is erased due to the removing of a battery or any other reason, it is necessary to set a current position. In the setting of the current position in such a case, it is set by moving the current position on a map picture by means of the arrow keys, the detail key or the wide area key, as shown in FIG. 11.

During automatic guide mode, if there is no guide object in the vicinity of the current position and the guide is not being performed, a map picture is displayed. Although objects are being searched for in this case also, it is possible to change the scale of a map by operating the detail key or the wide area key as shown in FIG. 12. Further, it is possible to invert the north/south direction of the map by operating the north/south key as shown in FIG. 13. Still further, it is possible to correct the current position of a vehicle by operating the set key, the correction key and the arrow key as shown in FIG. 14.

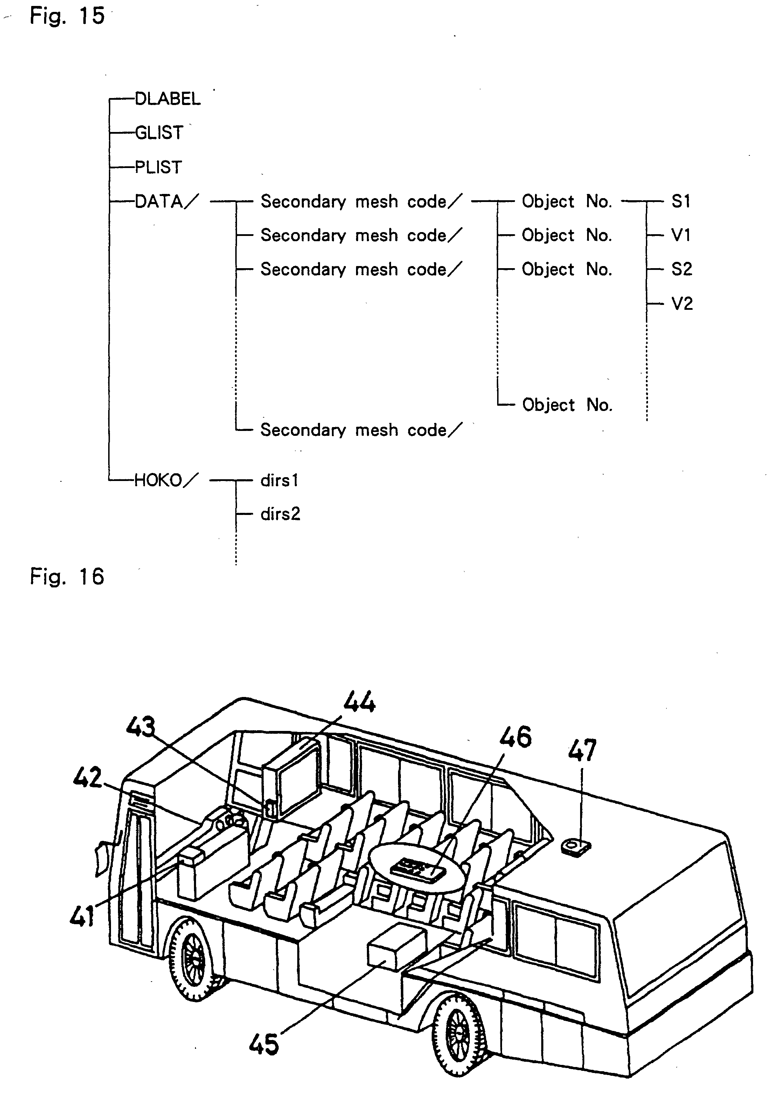

FIG. 15 is a diagram showing an example of the file configuration of a guide CD. The file configuration of the guide CD, for example as shown in FIG. 15, comprises disk label header DLABEL, guide object file GLIST, guide point file PLIST, guide data DATA and direction data HOKO, and a plurality of CDs composes the file configuration. The disk label header DLABEL comprises disk label attribute data and applicable area table (longitude, latitude) to be stored in the disk and enables to determine whether the current position is within the applicable area of a disk. The guide object file GLIST contains a table of guide object data including guide object No., object attribute (point object, line object, zone object, and point objects include information of width), number of guide start points, guide unit attribute (voice/image, voice only, information of the length of a unit), object names, object position secondary mesh No. and object position (longitude, latitude). The guide point file PLIST has a table of guide points including point attribute, point position (longitude, latitude), advancement direction and direction voice No.

FIG. 16 illustrates an appearance of a vehicle incorporating the guide system of the present invention. Reference numeral 41 denotes a guide output apparatus, numeral 42 denotes a vehicle speed sensor, numeral 43 denotes a remote control sensor, numeral 44 denotes a monitor TV, numeral 45 denotes a current position tracing unit, numeral 46 denotes a remote controller, and numeral 47 denotes a GPS antenna. In this example, the system of the present invention is applied to a sight-seeing bus, in which the remote controller 46 is provided and the guide output apparatus 41, the monitor TV 44 and the remote control sensor 43 are mounted behind a driver's seat so that passengers can operate this remote controller 46 to give instructions for switching between a sight-seeing display and a map picture display.

According to the above-described embodiment of the present invention, the guide objects are classified to point objects, line objects and zone objects, which are assigned with priority order, and search and extraction of sight-seeing objects is performed according to the information about the current position or the like, and the extracted objects are shown in a specified order by means of voice and images. Thus, the system of the present invention enables explanation about famous streets and local area to be performed in the interval of time in which no guiding of a point object is performed. Thus, the interval of the time in which no guiding is performed is reduced so as to provide passengers with tourist information without boring them. Further, the system of the present invention enables to search guide objects by changing the search range having a predetermined angle and distance by operating the manual key if no guide object is found as a result of searching them under a specified condition when a vehicle is travelling. Thus, it is possible to extract an object which could not be found in the initial search range by changing the search range in order to show the object. For example, if a vehicle goes and returns on the same course and the search range with respect to the current position on the going and returning ways is the same, the same guide objects will be found on both ways so that the same guide may be performed. However, if user wants to receive, on the return way, guiding about objects different from the objects shown on the going way, it is possible to search for objects different from those shown on the going way by changing the search range by operating the manual key, so that passengers can receive guiding different from that shown on the goring way, thus providing satisfactory tourist guide. Further, when guide objects are found in ordinary search range in order to output the found guide objects, if no object has been found for a long time or a passenger requests a special guide object, it is possible to search for a guide object in a search range varied by means of the manual key, so that sight-seeing objects can be found and extracted securely and then shown.

The present invention is not restricted to the aforementioned embodiment and can be modified in various manners. For example, although, according to the aforementioned embodiment, point objects, line objects and zone objects are classified and assigned with priority order so as to be searched according to the priority order, it is permissible to configure the system which searches for point objects in a wider area if there is found no point object which satisfies the condition. Further, although guide objects are classified to point object, line object and zone object in terms of the attribute thereof, the present invention is not restricted to this classification, but it is permissible to classify buildings as point and line objects and natural environment such as mountain, river or the like as zone object. Still further, it is permissible to provide guide objects with the degree of notability as the attribute thereof. Still further, in manual mode, it is possible to widen the search area, widen the search area along the advancement direction of a vehicle and select the search range freely. Additionally, it is permissible to change the search condition so that the type of guide objects is specified. That is, it is possible to set such a condition where buildings such as temples or the like are searched first of all and in which sight-seeing sites other than building are searched when the manual key is pressed. Or it is permissible to add a condition where only objects that are located forward along the advancement direction of a vehicle with respect to the current position thereof and the objects located backward of the advancement direction are excluded from the object for search. Still further, it is permissible to configure the system wherein the objects is classified more in details or wherein the priority order can be changed.

In the guide data storage means 3 according to the present embodiment, a guide unit of each guide objects comprises a plurality of phrases of guide sentence, and a plurality of guide sentences related to the season, time range, weather or the like are prepared. Then, a guide sentence having, for example, each phrase is selected according to the season, the time range, the weather or the like detected by the situation detecting means 11-1, 11-2, .... For example, as for the season, if such a phrase as "Many people gather to see cherry blossom in this season, ....", "A number of people camp or barbecue around park called ..."," Every year, 200,000 peoples see a festival called ... for four days from ... to ...", "The shrine ... where many people come on the 1st day of January was built about 560 years ago ...", it is possible to select an appropriate guide sentence to the season according to a calendar. Or as for time range, if such a guide sentence as "Business area spreads on opposite side of this street, filled with commuters, presenting active atmosphere different from night scene around hereS, RAt daytime, .... filled with business persons, office ladies and foreign tourists", "At night, this area entirely operates actively as an amusement site to lead the night life of Tokyo", "Even after the midnight, this area is active with full power of human being and provided with the appearance of a trendy town, always keeping many people pass therearound" is prepared, it is possible to select an appropriate guide sentence to commuter time, daytime, night or midnight. As for the weather also, if such a guide sentence as "Hot and stuffy", "Scorching hot", "Hot", "Warm", "Mild", "Chilly", "Cold", "Frosty" is prepared, it is possible to select an appropriate sentence according to detected temperature and humidity. If such a guide sentence as "When it is fine, ...", When it is partly fine, ...", "When it rains, . . .","It begins to rain, ...", "It rains heavily, ...", "It stops raining, ..." is prepared, it is possible to select an appropriate guide sentence by determining the weather according to the detection signal presented by the weather sensor, an illuminometer or the like.

As described above, a plurality of guide sentences regarding the season, time range of day, the weather or the like are stored in the guide data storage means 3 and the situation around a vehicle is detected by means of the situation detecting means. Then, an appropriate guide data is extracted by the search means of the guide output means 6 from the guide data storage means 3 and selected and output according to a situation detected by the situation detecting means 11-1, 11-2, ..... Thus, it is possible to select appropriate guide sentences to the situation when the guide is output and edit them so that the presented guide fits to and is natural for the atmosphere of the environment of the current position of a vehicle. The guide sentences of guide objects are stored in the guide data storage means 3 in such a manner that they are divided to a plurality of phrases and thus it is possible to select phrases according to the situation of the current position and further combine the phrases freely.

Although, in the aforementioned embodiment, an appropriate phrase of the guide sentence is selected corresponding to the season, time range, the weather or the like, it is permissible to add guide units for traffic congestion information which are output according to the degree of traffic congestion. Although, in the aforementioned embodiment, guide sentences are divided to a plurality of guide units and stored, and an appropriate guide sentence is composed by combining them according to the situation, it is permissible to store a plurality of guide sentences corresponding to the situation and select an appropriate guide sentence according to a detected situation. However, in the case in which the guide sentences are divided to a plurality of guide units and stored, and then an appropriate guide sentence is created by combining them according to the situation, the amount of stored data may be reduced compared to the latter case. Further, it is permissible to fix typical sentences common to all situations and change a phrase corresponding to the change of situation.

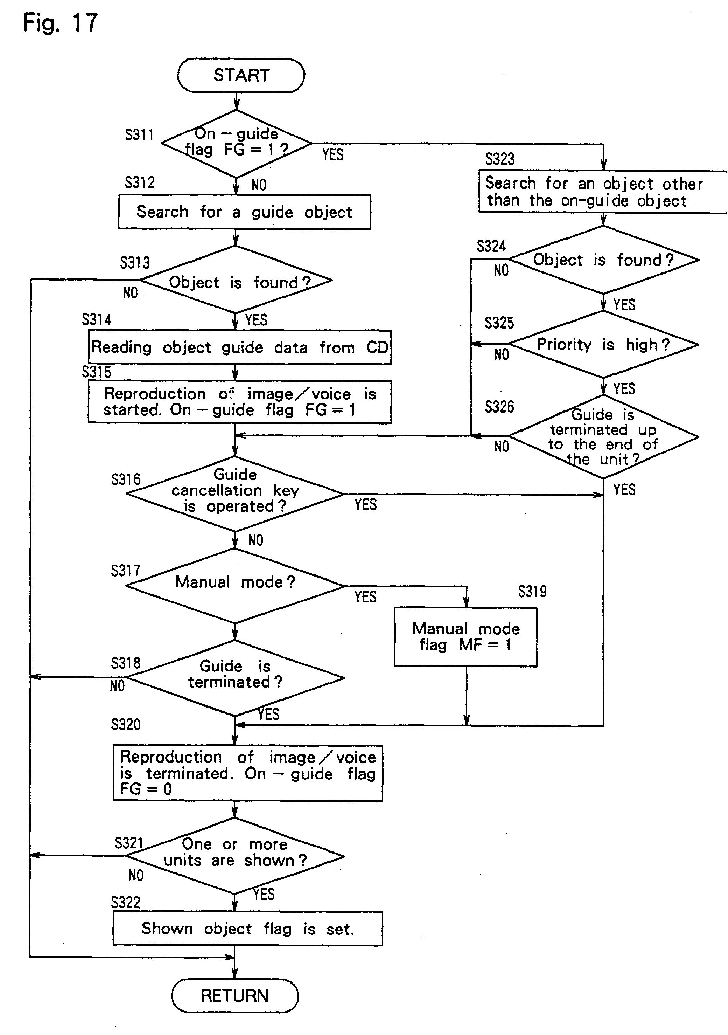

The guide output means 6 of the present embodiment may be formed as shown in FIG. 17. First, whether the on-guide flag FG is "1" is checked (step S311). If the on-guide flag FG is not "1", guide objects are searched (step S312). If there is found a guide object, the guide data of the object is read from the CD and then reproduction of image and voice is started, so that the on-guide flag FG is set to "1" (steps S313 - S315). After this, whether the guide cancellation key and the manual key were operated is checked and if they were not operated, whether the guide has been finished is checked (steps S316 - S318).

If the on-guide flag FG is "1", an object other than the on-guide object is searched (step S323). If an object is found, whether the priority thereof is higher than that of the on-guide object is checked (steps S324, S325). If the priority thereof is higher than that of the on-guide object, when the guide of the on-guide object is output up to the end of a guide unit (steps S326), the next step S320 and on are executed.

If it is determined that the guide cancellation key has been operated on the aforementioned step S316 or if the manual key has been operated and it is determined that the manual mode is ON in step S317, so that the manual mode flag MF is set to "1" (step S319) or if the guide has been completed in step S318 or if it is determined that the guide of the on-guide object has been output up to the end of the guide unit, reproduction of image and voice is immediately terminated and the on-guide flag FG is reset to "0" (step S320). At this time, if one or more guide units of the object of the object have output, the shown object flag of that object is set (steps S321, S322).

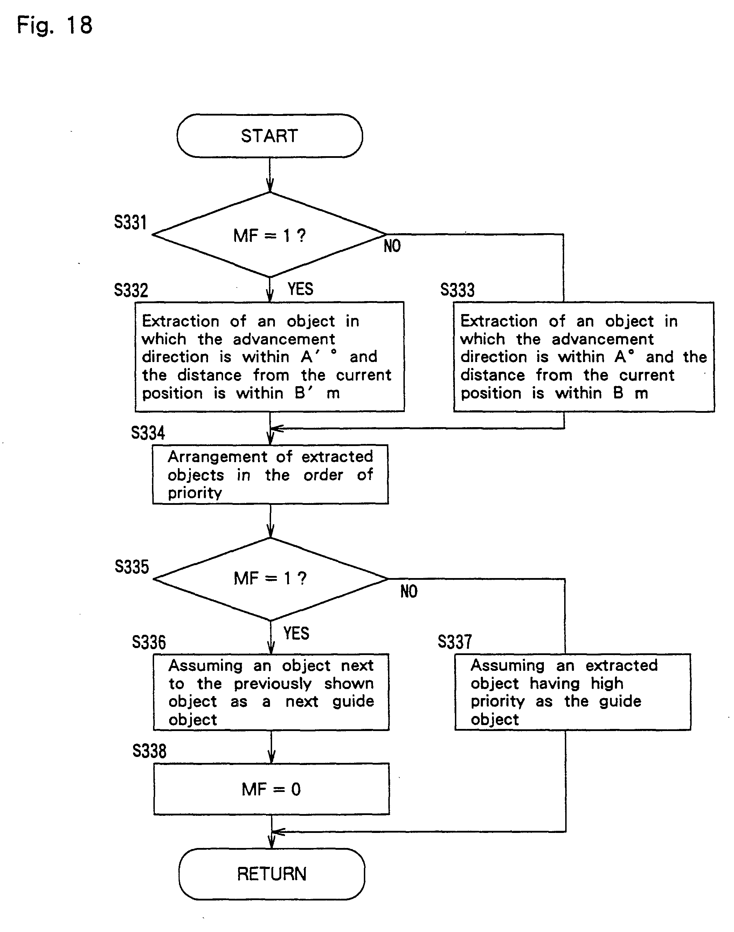

In the search processing of a guide object in step S312 in FIG. 17, whether the manual mode flag MF is "1" is checked as shown in FIG. 18 (step S331). If the manual mode flag MF is "0", objects which satisfy the condition where the advancement angle is within A° and the distance from the current position is within B m as explained in FIG. 2 are extracted according to the current position, direction and speed of a vehicle (step S333). If the manual mode flag MF is "1", objects which satisfy the condition where the advancement angle is within A'° which is wider than A° and the distance from the current position is within B'm which is longer than B m are extracted (step S332) and the objects which satisfy such condition are arranged in the order of the priority (step S334). If the manual mode flag MF is "1", an object next to the previously shown object is assumed as a guide object and then the manual mode flag MF is reset to "0". If the manual mode flag MF is "0", the object having the highest priority is assumed as a guide object.

As described above, if the next guide object is extracted during guiding of an object, the guide output means 6 of the aforementioned embodiment cancels the guide of an on-guide object the end of the guide unit is finished, and then the guide of the next guide object is started. Thus, even if a plurality of guide objects are provided at the same time, it is possible to switch the guide at the end of every guide unit. Thus, the guide output means 6 of the present embodiment enables the guide of respective objects without inconvenience.

Because of provision of guide data with information of priority, the guide output means compares the guide data of an on-guide object with the guide data of next guide object in terms of information of the priority when the next guide object is extracted during the guide of an object, and then extracts the guide data having higher priority. Thus, guide important objects can be guided in details thereby achieving well-balanced guide without an omission. Because guide data are stored in the form of a plurality of guide units and the respective guide units are assigned with information about priority, the guide output means compares guide data in terms of the information of the priority of each guide unit , and extracts guide data having higher priority.
Thus, by setting the priority of each guide unit, it is made possible to provide important information of guide objects without omission thereby reducing the number of the objects which are not shown.

Further, because already shown guide data as shown objects, even if a vehicle travels on the same road when the vehicle goes and returns, it is possible to omit shown guide data when it comes from a destination. Still further, by assigning each guide unit with information of the priority, it is made possible to output the guide units which have not been shown, according to information of the priority.

The present invention is not restricted to the aforementioned embodiments but can be modified in various manners. For example, although the aforementioned embodiment is formed so that already shown objects will not shown again, it is permissible to provide the shown objects with low priority in order to show the already shown objects when there is no guide object in the vicinity of the current position of a vehicle.

## Claims

1. A guide system comprising:
guide data storing means (3) wherein guide data for showing objects located on a road, on streets and objects existing in a local area are classified into types and stored,
guide information output means for outputting the guide information of an object to be shown,
current position detecting means (5) for detecting and tracing the current position, and
guide output means (6) having a plurality of search means for searching for a guide object for each of said types according to a current position obtained from said current position detecting means, said guide output means searching for and extracting an object from said guide data storing means and outputting the guide thereof.

2. A guide system comprising:
guide data storing means (3) for storing data for outputting guide information, position data, and data for assigning priority for outputting guide information; current position detecting means (5) for detecting and tracing the current position of the vehicle;
search means comprising priority assigning means for assigning priorities for outputting guide information of the objects; and
guide output means (6) for reading guide data on the objects from the storage means based on the priorities assigned by said priority assigning means and
outputting said guide data;
**characterized in that**
(a) guide data for showing objects located on a road, on streets and objects existing in a local area are classified into types and stored; and
(b) the priority assigning means assigns the priorities on the basis of the position data of the objects and the relationship between the position information of the objects and the current position of the vehicle detected by said current position detecting means.

3. The system according to claim 2 , wherein said data for assigning priorities is information showing the type of guide objects.

4. The system according to any of claims 1 to 3, wherein said information showing the type of guide objects is information indicating point object, line object or zone object.

5. The system according to any of claims 2 to 4, wherein said data for assigning priorities is priority information stored for each of the objects.

6. The system according to any of claims 1 to 5, wherein said guide data is divided into a plurality of guide units and stored in said storing means (3), and wherein said guide output means (6) stops the output of guide data of the current guide unit and outputs guide data of the other objects when other objects are extracted during object guidance.

7. The system according to any of claims 1 to 5, wherein said guide output means (6) compares the priority of guide data of the object in the course of guidance with guide data of other objects to be output, and gives guidance for guide data with higher priority.

8. The system according to any of claims 1 to 5, wherein said guide data is divided into a plurality of guide units and stored in said storing means (3), provides priority information to each of the guide units, and wherein said output means (6) compares the priority of guide data of the object in the course of guidance with guide data of other objects to be output, and gives guidance for guide data with higher priority.

9. The system according to any of claims 1 to 8, further comprising detection area determining means for determining the object within a predetermined angle relative to the travel direction of the vehicle detected by said current position detecting means (5).

10. The system according to claim 9, wherein said detection area determining means expands the detection area when the object cannot be detected within the searched area.

## Patentansprüche

1. Führungssystem mit:
einer Führungsdatenspeichereinrichtung (3), in der Führungsdaten zum Darstellen von an einer Straße oder an Straßen angeordneten Objekten und von in einem Ortsbereich vorhandenen Objekten in Typen klassifiziert und gespeichert sind;
einer Führungsinformationsausgabeeinrichtung zum Ausgeben von Führungsinformation für ein darzustellendes Objekt;
einer Ist-Positionserfassungseinrichtung (5) zum Erfassen und Nachführen der Ist-Position; und
einer Führungsausgabeeinrichtung (6) mit mehreren Sucheinrichtungen zum Suchen eines Führungsobjekts für jeden der Typen gemäß einer von der Ist-Positionserfassungseinrichtung erhaltenen Ist-Position, wobei die Führungsausgabeeinrichtung ein Objekt in der Führungsdatenspeichereinrichtung sucht und von der Führungsdatenspeichereinrichtung extrahiert und eine Führung für das Objekt ausgibt.

2. Führungssystem mit:
einer Führungsdatenspeichereinrichtung (3) zum Speichern von Daten zum Ausgeben von Führungsinformation, von Positionsdaten und von Daten zum Zuweisen einer Priorität für die Ausgabe von Führungsinformation;
einer Ist-Positionserfassungseinrichtung (5) zum Erfassen und Nachführen der Ist-Position eines Fahrzeugs;
Sucheinrichtungen mit Prioritätzuweisungseinrichtungen zum Zuweisen von Prioritäten für die Ausgabe von Führungsinformation für die Objekte; und
einer Führungsausgabeeinrichtung (6) zum Auslesen von Führungsdaten für die Objekte von der Speichereinrichtung basierend auf den durch die Prioritätzuweisungseinrichtungen zugewiesenen Prioritäten und zum Ausgeben der Führungsdaten;
**dadurch gekennzeichnet, daß**
(a) Führungsdaten zum Darstellen von an einer Straße oder an Straßen angeordneten Objekten und von in einem Ortsbereich vorhandenen Objekten in Typen klassifiziert und gespeichert sind; und
(b) die Prioritätzuweisungseinrichtungen die Prioritäten auf der Basis der Positionsdaten der Objekte und der Beziehung zwischen der Positionsinformation der Objekte und der durch die Ist-Positionserfassungseinrichtung erfaßten Ist-Position des Fahrzeugs zuweisen.

3. System nach Anspruch 2, wobei die Daten zum Zuweisen von Prioritäten den Typ von Führungsobjekten darstellende Information darstellen.

4. System nach einem der Ansprüche 1 bis 3, wobei die den Typ von Führungsobjekten darstellende Information ein Punktobjekt, ein Linienobjekt oder ein Bereichobjekt anzeigt.

5. System nach einem der Ansprüche 2 bis 4, wobei die Daten zum Zuweisen von Prioritäten für jedes der Objekte gespeicherte Prioritätsinformation darstellen.

6. System nach einem der Ansprüche 1 bis 5, wobei die Führungsdaten in mehrere Führungseinheiten unterteilt und in der Speichereinrichtung (3) gespeichert sind, und wobei die Führungsausgabeeinrichtung (6) die Ausgabe von Führungsdaten der aktuellen Führungseinheit unterbricht und Führungsdaten anderer Objekte ausgibt, wenn während der Objektführung andere Objekte extrahiert werden.

7. System nach einem der Ansprüche 1 bis 5, wobei die Führungsausgabeeinrichtung (6) die Priorität von Führungsdaten des Objekts während der Führung mit auszugebenden Führungsdaten anderer Objekte vergleicht und eine Führung für Führungsdaten mit höherer Priorität bereitstellt.

8. System nach einem der Ansprüche 1 bis 5, wobei die Führungsdaten in mehrere Führungseinheiten unterteilt und in der Speichereinrichtung (3) gespeichert sind, wobei für jede der Führungseinheiten eine Prioritätsinformation bereitgestellt wird, und wobei die Ausgabeeinrichtung (6) die Priorität der Führungsdaten des Objekts während der Führung mit auszugebenden Führungsdaten anderer Objekte vergleicht und eine Führung für Führungsdaten mit höherer Priorität bereitstellt.

9. System nach einem der Ansprüche 1 bis 8, ferner mit einer Erfassungsbereichbestimmungseinrichtung zum Bestimmen des Objekts innerhalb eines vorgegebenen Winkels bezüglich der durch die Ist-Positionserfassungseinrichtung (5) erfaßten Fahrtrichtung des Fahrzeugs.

10. System nach Anspruch 9, wobei die Erfassungsbereichbestimmungseinrichtung den Erfassungsbereich erweitert, wenn das Objekt innerhalb des Suchbereichs nicht erfaßt werden kann.

## Revendications

1. Un système de guidage comprenant :
des moyens de stockage de données de guidage (3) où les données de guidage servant à représenter des objets situés sur une route, dans des rues et des objets se trouvant dans une zone locale sont classifiées par types et stockées,
des moyens de délivrance d'informations de guidage pour délivrer les informations de guidage d'un objet à représenter,
des moyens de détection de position actuelle (5) pour détecter et tracer la position actuelle, et
des moyens de sortie de guidage (6) ayant une pluralité de moyens de recherche pour rechercher un objet de guidage pour chacun desdits types selon une position actuelle obtenue par lesdits moyens de détection de position actuelle, lesdits moyens de sortie de guidage recherchant et extrayant un objet desdits moyens de stockage des données de guidage et délivrant le guidage de ce dernier.

2. Un système de guidage comprenant :
des moyens de stockage des données de guidage (3) pour stocker des données servant à délivrer des informations de guidage, des données de position et des données servant à attribuer une priorité à la délivrance des informations de guidage ;
des moyens de détection de position actuelle (5) pour détecter et tracer la position actuelle du véhicule ;
des moyens de recherche comprenant des moyens d'attribution de priorité pour attribuer des priorités à la délivrance des informations de guidage des objets ; et
des moyens de sortie de guidage (6) pour lire les données de guidage sur les objets provenant des moyens de stockage en se basant sur les priorités attribuées par lesdits moyens d'attribution de priorité et pour délivrer lesdites données de guidage ;
**caractérisé en ce que**
(a) les données de guidage servant à représenter des objets situés sur une route, dans des rues et des objets se trouvant dans une zone locale sont classifiées par types et stockées ; et
(b) les moyens d'attribution de priorité attribuent les priorités en se basant sur les données de position des objets et sur la relation entre les informations de position des objets et la position actuelle du véhicule détectée par lesdits moyens de détection **de position** actuelle.

3. Le système selon la revendication 2, dans lequel lesdites données servant à attribuer les priorités sont des informations représentant le type d'objets de guidage.

4. Le système selon l'une quelconque des revendications 1 à 3, dans lequel lesdites informations représentant le type d'objets de guidage sont des informations indiquant un objet de point, un objet de ligne ou un objet de zone.

5. Le système selon l'une quelconque des revendications 2 à 4, dans lequel lesdites données servant à attribuer les priorités sont des informations de priorité stockées pour chacun des objets.

6. Le système selon l'une quelconque des revendications 1 à 5, dans lequel lesdites données de guidage sont divisées en une pluralité d'unités de guidage et stockées dans lesdits moyens de stockage (3), et dans lequel lesdits moyens de sortie de guidage (6) arrêtent la délivrance des données de guidage de l'unité de guidage actuelle et délivrent des données de guidage des autres objets lorsque d'autres objets sont extraits lors du guidage par objets.

7. Le système selon l'une quelconque des revendications 1 à 5, dans lequel lesdits moyens de sortie de guidage (6) comparent la priorité des données de guidage de l'objet au cours du guidage à des données de guidage d'autres objets à délivrer, et donne au guidage des données de guidage une priorité plus importante.

8. Le système selon l'une quelconque des revendications 1 à 5, dans lequel lesdites données de guidage sont divisées en une pluralité d'unités de guidage et stockées dans lesdits moyens de stockage (3), donnent des informations de priorité à chacune des unités de guidage, et dans lequel lesdits moyens de sortie (6) comparent la priorité des données de guidage de l'objet au cours du guidage à des données de guidage d'autres objets à délivrer, et donnent au guidage des données de guidage une priorité plus importante.

9. Le système selon l'une quelconque des revendications 1 à 8, comprenant cn outre des moyens de détermination de zone de détection servant à déterminer l'objet à l'intérieur d'un angle prédéterminé par rapport à la direction de déplacement du véhicule détectée par lesdits moyens de détection de la position actuelle (5).

10. Le système selon la revendication 9, dans lequel lesdits moyens de détermination de zone de détection agrandissent la zone de détection lorsque l'objet ne peut pas être détecté à l'intérieur de la zone recherchée.
